## Europäisches Patentamt
## European Patent Office
## Office européen des brevets

(19)

(11) Publication number: **0 007 241**
B1

(12) **EUROPEAN PATENT SPECIFICATION**

(45) Date of publication of patent specification: **17.03.82**

(51) Int. Cl.³: **C 01 B 17/50**

(21) Application number: **79301402.8**

(22) Date of filing: **16.07.79**

(54) Process for purification of gases containing elemental sulphur.

(30) Priority: **17.07.78 US 925125**

(43) Date of publication of application:
**23.01.80 Bulletin 80/2**

(45) Publication of the grant of the patent:
**17.03.82 Bulletin 82/11**

(84) Designated Contracting States:
**BE DE FR GB IT NL**

(56) References cited:
**DE - A1 - 2 342 150**
**DE - B - 1 298 088**
**DE - C - 553 817**
**GB - A - 985 784**
**US - A - 2 156 791**
**US - A - 2 539 579**
**US - A - 2 813 006**
**US - A - 2 813 007**
**US - A - 4 053 573**

(73) Proprietor: **STAUFFER CHEMICAL COMPANY**
**Westport Connecticut 06880 (US)**

(72) Inventor: **Creagh, Joseph Patrick**
**2346 NW Glisan Apt. 38**
**Portland, Oregon 97210 (US)**
Inventor: **Riley, Douglas Clifton**
**5622 Estelle Drive**
**Baton Rouge, Louisiana 70816 (US)**
Inventor: **Lusk, Edwin Bruce**
**206 Pecan Tree Lane**
**Plaquemine, Louisiana 70764 (US)**

(74) Representative: **Smith, Sydney et al,**
**Elkington and Fife High Holborn House 52/54**
**High Holborn**
**London WC1V 6SH (GB)**

Courier Press, Leamington Spa, England.

Process for purification of gases containing elemental sulphur

This invention relates to the purification of gases containing elemental sulphur and optionally containing carbonaceous material.

More particularly, as will be discussed therein, this invention relates to a method for purification of sulphur dioxide containing elemental sulphur and optionally containing carbonaceous material.

One process for making sulphur dioxide is disclosed in British Patent 985,784 and comprises the reaction of sulphur with sulphur trioxide in a pool of molten sulphur and highly concentrated sulphuric acid (100 to 101%). The sulphur and sulphur trioxide react below the surface of the pool at temperatures of from 120°C to 150°C., producing sulphur dioxide. A similar process of this type is shown in U.S. Patent 2,813,007. Another process for production of sulphur dioxide is shown in U.S. Patent 2,539,579 and comprises the reaction of gaseous sulphur trioxide with solid sulphur at temperatures below the melting point of sulphur, generally from about 50°C. to about 100°C. In another type of process sulphur dioxide is prepared by a gas phase reaction of sulphur and sulphur trioxide as described, for instance, in U.S. Patents 2,156,791 and 2,813,006. Still another process is that described in U.S. Patent 4,053,573 which deals with preparation of sulphur dioxide by reaction of molten sulphur with spent sulphuric acid.

In such processes, the sulphur dioxide gas produced by the reaction generally also contains elemental sulphur, as sulphur vapor and/or particles of entrained liquid or solid sulphur. In addition, if the sulphur and/or sulphuric acid utilized for the reaction has contained carbonaceous impurities, such impurities may also be contained in the sulphur dioxide product gas. The presence of elemental sulphur (and/or carbonaceous impurities) in the sulphur dioxide gas may cause serious plugging of downstream processing and purification equipment and may result in contamination of product sulphur dioxide or other products produced from it, such as sulphuric acid.

Several techniques have been utilized or suggested in prior art operations for removing sulphur contained in the sulphur dioxide product gases. However, such techniques have either not sufficed to remove sufficient amounts of sulphur or have proved to be be expensive in light of the results obtained. Alternatively such techniques may only be satisfactory for use in connection with processes which produce sulphur dioxide at rather high temperatures. For instance, British Patent 985,784 referred to above discloses the scrubbing of the sulphur dioxide gas with 98% sulphuric acid. However, it has been found that such scrubbing may not be sufficient to remove all the sulphur from the product gases. U.S. Patent 2,813,007 referred to above states that in order to prevent carryover of sulphur into downstream rectification equipment an excess of sulphur trioxide must be maintained in the gas phase over the molten pool of sulphur, or sulphur trioxide must be introduced into the lower deck of the rectification section through which ascending sulphur-containing gases pass from the sulphur dioxide production reactor. In the process of U.S. Patent 4,053,573 referred to above sulphur contained in the product gases is removed by condensation. This again may not be sufficient to remove enough of the sulphur from the product gases. U.S. Patent 2,813,006 referred to above discloses production of sulphur dioxide gas in a gas phase reaction of sulphur with sulphur trioxide. This reaction generates a product gas which contains a large amount of sulphur vapour; at column 3, line 27, it is stated that the sulphur vapor can be 17% by volume of the product gases. This sulphur vapor is removed through the by-passing of a major portion of the sulphur trioxide fed to the reactor and reacting the thus by-passed sulphur trioxide in the gas phase with the sulphur contained in the sulphur dioxide product gases, converting the sulphur to additional sulphur dioxide. Such a process requires a high temperature of at least 650°F. (343°C) and is thus not suitable for use to purify the gases from a reactor in which sulphur trioxide or sulphuric acid is reacted with molten sulphur, which operates at lower temperatures. Attempts to operate such a gas-phase purification step at lower temperatures have been made and have resulted in incomplete conversion of the sulphur.

In addition to sulphur dioxide produced by such processes, sulphur contamination may also cause problems in handling and product purity of other gases containing elemental sulphur.

With one exception, none of the above-mentioned patents discloses means for removing carbonaceous substances which may be introduced into the sulphur dioxide production zone as impurities in one or another feed. The sole exception is U.S. Patent 4,053,573 referred to above in which these impurities are removed by purging from the pool of molten sulphur. However, such impurities may also be carried downstream in the sulphur dioxide product gases. Carbonaceous impurities, in general, present the same types of problems as elemental sulphur; that is, plugging of equipment and the presence of impurities in the product or products of the plant. Sulphuric acid containing substantial amounts of carbonaceous material could not readily be disposed of as a product; it would either be recycled to the main process (if possible) or be treated as sludge.

The inability to remove carbonaceous impurities from sulphur dioxide process streams also prohibits the use of impure sulphur, e.g. "dark" sulphur as a feed to the process; only purified sulphur is acceptable.

The present invention provides a method for removal of elemental sulphur from gases, particularly gases containing primarily sulphur dioxide. It also provides an improvement in a process for production of sulphur dioxide by reaction of elemental sulphur with sulphur trioxide or sulphuric acid, in which the product sulphur dioxide gases can be purified from elemental sulphur contained therein. It further provides a method for removing carbonaceous impurities contained in gases, particularly gases containing primarily sulphur dioxide, and more particularly gases produced by the reaction of sulphur with sulphur trioxide or sulphuric acid in which carbonaceous impurities are contained in one or more of the reactants.

In brief, this invention comprises a process for purification of a gas containing as an impurity elemental sulphur, comprising contacting the gas with gaseous sulphur trioxide in a pool of oleum maintained at a temperature of from about 82°C to about 121°C (180—250°F).

The invention therefore provides a process for the purification of a gas containing as an impurity elemental sulphur characterised in that the gas is contacted with gaseous sulphur trioxide in a pool of oleum at a temperature of about 82°C to about 121°C.

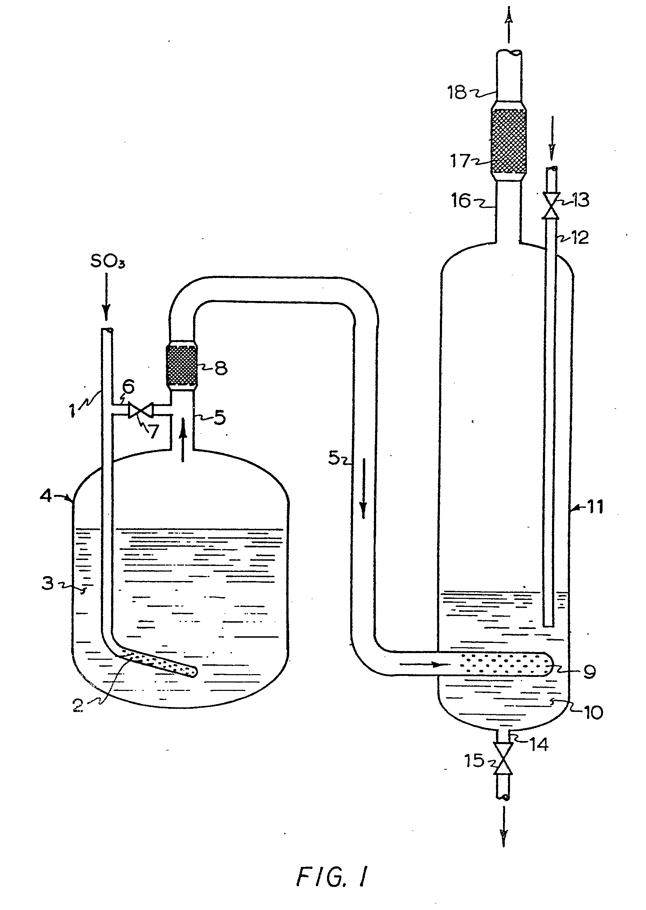

For the purpose of convenience this invention will now be described with reference to the process shown in the single Figure of the accompanying drawing which is a flow sheet of a preferred embodiment according to the invention wherein the invention is applied to a conventional process for preparation of sulphur· dioxide by rection of sulphur trioxide with molten sulphur in a reactor. However, as mentioned, this invention may be used for removal of sulphur from various gases, and from sulphur dioxide gases produced by other means such as the processes described in the patents mentioned previously herein.

Referring to the Figure, gaseous sulphur trioxide is introduced by a line 1 and sparger 2 below the surface of a pool of molten sulphur 3 which is contained within the reactor 4. As described in the prior art the sulphur trioxide and sulphur react producing sulphur dioxide. The producing gases, containing primarily sulphur dioxide, perhaps some unreacted sulphur trioxide, and unreacted elemental sulphur, generally in the vapour from or as entrained particles, are removed from reactor 4 in overhead line 5. If, as may often be the case, the sulphur utilized in the reactor has contained carbonaceous impurities, some of these impurities may also be carried out with the product gases in overhead line 5. The gases are then passed through a demister 8. In general, in the prior art processes, the gases might then be passed to a gas phase reactor in which sulphur trioxide was added to react with the entrained sulphur in the gas phase and produce additional sulphur dioxide while at the same time removing the sulphur impurity. This would be followed by passage through a sulphuric acid scrubber to remove additional impurities before being further processed.

According to the embodiment shown however sulphur trioxide is added to the gases leaving reactor 4 via line 5. This sulphur trioxide may be added to the gases at any convenient point in line 5 and may be supplied from the main sulphur trioxide source or from any other convenient source of sulphur trioxide. One method of adding the sulphur trioxide is shown in the Figure, wherein a take-off line 6 is provided in the main sulphur trioxide supply line 1. The take-off line 6 is equipped with a valve 7 which may be used to bypass a portion of the sulphur trioxide in line 1 around the reactor and into the gas in overhead line 5. The gases in line 5, now containing sulphur dioxide, elemental sulphur and the added sulphur trioxide are introduced into sparger 9 below the surface of a pool of oleum 10 contained in purification reactor 11. Preferably, as shown in the Figure, the sulphur trioxide gas is added to the sulphur dioxide prior to introduction of the two gases into the pool of oleum, in order to provide better mixing. However, the sulphur trioxide may ·also be added separately to the pool of oleum by use of another inlet (not shown). Reactor 11 is equipped with an oleum inlet 12 and a drain 14, both of which are suitably equipped with valves 13 and 15 respectively.

In the purification reactor 11 the elemental sulphur reacts with the added sulphur trioxide in the presence of the oleum to produce additional sulphur dioxide. The product gases are removed in overhead line 16, passed through a demister 17 and taken off in line 18 for further processing by conventional means.

In general, the pool of oleum is maintained at a temperature of from about 82°C (180°F) to about 121°C (250°F). The temperature at which the oleum is maintained is related in part to the rate of operation (with respect to design flow rates of materials) of the process. The oleum is maintained at a strength of at least 100.1% equivalent sulphuric acid, preferably about 100.5—108%; however, in general, a strength of about 101—103% is sufficient for most operations. The oleum is maintained at a proper strength by the addition of the sulfur trioxide in line 5. At lower rates of operation, the oleum temperature will be at a lower point in the desired range, generally from 82—93°C (180—200°F) and the strength will be at a higher value due to the greater retention of sulphur trioxide in the oleum. At higher rates of operation the oleum temperatures will generally be in the range of 93—121°C (200—250°F) preferably about 104—118°C (220—245°F) and the oleum acid strength will lie towards the lower end of its range due to the more rapid loss ot sulphur trioxide by vaporization.

The sulphur trioxide addition into line 5 and thence into purification reactor 11 is controlled so as to maintain the desired acid strength of the oleum, and may be conveniently controlled by analysis of the oleum and adjustment of the sulphur trioxide addition, either manually or automatically, in response to the acid strength of the oleum. When bypassing feed sulphur trioxide through line 6 in the embodiment shown in the Figure, it is usually sufficient to bypass about 0.5—1% of the total feed. Close control of the sulphur trioxide is not necessary; the major limitation on sulphur trioxide content is the capacity of downstream scrubbers or absorbers to remove sulphur trioxide passing out of the purification reactor 11 in line 18. Generally, such equipment can control up to about 0.4—0.5% sulphur trioxide in the gas streams. Consequently, in such plants, the upper limit on sulphur trioxide which could be introduced into reactor 11 would be that amount which, under the operating conditions, would produce an overhead gas line 18 containing 0.5% sulphur trioxide. For this reason, the sulphur trioxide addition could also be controlled in response to the sulphur trioxide concentration in the overhead gases leaving reactor 11, measured at any appropriate point.

The gases entering the purification reactor 11 are preferably at a temperature of at least the freezing point of sulphur (about 235°F or 113°C) in order to prevent the deposition of solid sulphur in the equipment (with consequent plugging problems). In general, the gases entering the reactor in line 5 may be at a temperature of about 113—176°C (235—350°F), and are preferably at a temperature of about 115.5—138°C (240—280°F). For this reason, when utilized in connection with the production of sulphur dioxide, this invention finds greater applicability to treatment of sulphur dioxide produced by lower temperature processes, i.e. solid or liquid phase reactions, than by higher temperature, i.e. gas phase reactions. The gases produced by the lower temperature processes would require relatively little or no heating or cooling before introduction into the purification reactor 11. On the other hand, the gaseous product of a higher temperature reaction (for example, as described in U.S. Patent 2,813,006) would require substantial cooling, and although such cooling could be effected and such a gas could be purified by this process, it would generally be uneconomical.

In addition to the removal of sulphur in the purification reactor, if carbonaceous material is also present in the entering gases, it is collected in the oleum pool and can be removed by purging the pool through drain 14 while adding fresh oleum through inlet 12, which can be performing without shutting down the reactor. It has further been found that maintenance of the oleum strength at about 102—103% equivalent sulphuric acid can produce complete or nearly complete oxidation of the carbonaceous impurities, without contamination of the oleum, so as to permit continuous operation of reactor 11 with little or no purging of oleum required. The capacity for removal of carbonaceous impurities permits the use of impure sulphur or sulphuric acid as a reactant in the primary reactor 4.

Another advantage of this process, when used in connection with sulphur dioxide production, is that it also possesses the capacity to act as a trap and contain spill-overs or boil-overs from the primary reactor (due, e.g. to temporary over heating) without these affecting downstream operations.

While this process has been described in terms of purification of sulphur dioxide-containing gases, it is not limited to such operations, but is applicable to the treatment of any gas which contains elemental sulphur and optionally carbonaceous matter, and which will not react with sulphur trioxide or oleum under the conditions employed. For instance, this process may be used to remove sulphur from gases containing sulphur dioxide, sulphur trioxide, oxygen, nitrogen or carbon dioxide. All gases should preferably be dry before purification to prevent dilution of the oleum strength because of the presence of water.

The following example serves to illustrate further the process of the present invention.

EXAMPLE

A purification reactor of the type shown as 11 in the Figure was installed in a plant producing 75 tons per day of sulphur dioxide gas by reaction of sulphur trioxide with molten sulphur at temperatures of 132—157°C (270—315°F). A product stream containing 99.9% of sulphur dioxide and approximately 200 ppm elemental sulphur was removed from the primary reactor in line 5. About 0.5% of the sulphurtrioxide feed was by-passed through line 6 and added to the gaseous products of reactor 5. The purification reactor 11 was filled to a height about 3 feet (0.91 m.) above the sparger 9 with oleum having an initial strength of 107.65% sulphuric acid. The mixed gases containing sulphur dioxide, sulphur trioxide and sulphur, together with carbonaceous matter, were sparged through sparger 9 into the pool 10 of oleum for a period of 21 days. The strength of the oleum varied according to the amount of sulphur trioxide contained in the incoming gases and was between 101.3 and 107.65. After 6 days of operation the oleum height was lowered to (0.46 m) (1.5 feet) above the spargers. The temperature of the reactor varied with the rate of operation of the process. When the process was operating at maximum flow rates, the temperature in purification reactor 11 was between about 95.5°C and about 105.5°C (204—222°F). At lower rates of operation the temperature in this reactor was between about 82°C and about 93°C (180—200°F). The gases leaving the purification reactor through line 16 were passed to an absorber and contacted with 98% sulphuric acid. In operations not using this purification system, the acid discharged from the absorber appeared cloudy and was found to contain elemental sulphur. When the purification reactor 11 was utilized in this Example, the acid discharged from the absorber appeared to be as clear as the acid supplied to it.

The oleum in purification reactor 11 was examined and found to contain carbon and ash. The gases leaving reactor 11 did not appear to contain carbonaceous matter.

## Claims

1. A process for the purification of a gas containing as an impurity elemental sulphur characterised in that the gas is contacted with gaseous sulphur trioxide in a pool of oleum at a temperature of about 82°C to about 121°C.

2. A process as claimed in claim 1 characterised in that one first contacts the gas with the sulphur trioxide and second introduces the gas now containing sulphur trioxide into the pool of oleum.

3. A process as claimed in claim 1 or claim 2 characterised in that the gas to be purified includes sulphur dioxide.

4. A process as claimed in any of claims 1 to 3 characterised in that the gas to be purified additionally contains as an impurity, carbonaceous matter.

5. A process as claimed in any of claims 1 to 4 characterised in that the temperature of the oleum is from about 104—118°C.

6. A process as claimed in any of claims 1 to 5 characterised in that the oleum is maintained at an acid strength of from about 100.5 to about 108% equivalent sulphuric acid.

7. A process as claimed in claim 6 characterised in that the oleum is maintained at an acid strength of from about 101 to about 103% equivalent sulphuric acid.

8. A process as claimed in any of claims 1 to 7 characterised in that one determines the acid strength of the oleum and controls the amount of sulphur trioxide utilized in the reaction so as to maintain the oleum at a predetermined acid strength.

9. A process as claimed in any of claims 1 to 8 characterised in that the gas after purification contains sulphur trioxide, and the concentration of this is determined, the amount of sulphur trioxide utilised in the reaction being such as to maintain a maximum concentration in the purified gas of 0.5%.

10. A process as claimed in any of claims 1 to 8 in which the gas to be purified is at a temperature of about 113—176°C.

## Patentansprüche

1. Verfahren zum Reinigen eines Gases, das elementaren Schwefel als Verunreinigung enthält, dadurch gekennzeichnet, daß das Gas bei einer Temperatur von ca. 82°C bis ca. 121°C in einer Oleumvorlage mit gasförmigem Schwefeltrioxid in Berührung gebracht wird.

2. Verfahren nach Anspruch 1, dadurch gekennzeichnet, daß das Gas zunächst mit dem Schwefeltrioxid in Berührung gebracht wird und dann das nun das Schwefeltrioxid enthaltende Gas in die Oleumvorlage eingeleitet wird.

3. Verfahren nach einem der Ansprüche 1 oder 2, dadurch gekennzeichnet daß das zu reinigende Gas Schwefeldioxid ist.

4. Verfahren nach einem der Ansprüche 1 bis 3, dadurch gekennzeichnet, daß das zu reinigende Gas als Verunreinigung zusätzlich kohlenstoffhaltige Substanz enthält.

5. Verfahren nach einem der Ansprüche 1 bis 4, dadurch gekennzeichnet, daß die Temperatur des Oleums ungefähr 104 bis 118°C beträgt.

6. Verfahren nach einem der Ansprüche 1 bis 5, dadurch gekennzeichnet, daß die Säurestärke des Oleums auf einem Wert im Bereich von ca. 100,5 bis ca. 108 Äquivalent-% Schwefelsäure gehalten wird.

7. Verfahren nach Anspruch 6, dadurch gekennzeichnet, daß die Säurestärke des Oleums auf einem Wert im Bereich von ca. 101 bis ca. 103 Äquivalent-% Schwefelsäure gehalten wird.

8. Verfahren nach einem der Ansprüche 1 bis 7, dadurch gekennzeichnet, daß zur Aufrechterhaltung einer vorgegebenen Säurestärke des Oleums diese Säurestärke des Oleums überwacht und unter Führung durch die bestimmten Säurestärkewerte die für die Reaktion benötigte Menge Schwefeltrioxid geregelt wird.

9. Verfahren nach einem der Ansprüche 1 bis 8, dadurch gekennzeichnet, daß das Gas nach der Reinigung Schwefeltrioxid enthält, daß diese Schwefeltrioxidkonzentration überwacht wird, und daß die für die Reaktion eingesetzte Menge Schwefeltrioxid so eingestellt wird, daß ein Maximum der Schwefeltrioxidkonzentration in dem gereinigten Gas von 0,5% eingehalten wird.

10. Verfahren nach einem der Ansprüche 1 bis 8, dadurch gekennzeichnet, daß das zu reinigende Gas eine Temperatur von ca. 113 bis 176°C hat.

## Revendications

1. Procédé de purification d'un gaz contenant en tant qu'impureté du soufre élémentaire, caractérisé en ce que le gaz est mis au contact de trioxyde de soufre gazeux dans un bain d'oléum à une température d'environ 82°C à environ 121°C.

2. Procédé selon la revendication 1, caractérisé en ce que l'on met tout d'abord le gaz au contac de trioxyde de soufre puis ensuite en ce que le gaz contenant alors du trioxyde de soufre est introduit dans le bain d'oléum.

3. Procédé selon la revendication 1 ou 2, caractérisé en ce que le gaz à purifier contient du dioxyde de soufre.

4. Procédé selon une quelconque des revendications 1 à 3, caractérisé en ce que le gaz à purifier contient en outre en tant qu'impureté, une matière carbonée.

5. Procédé selon une quelconque des revendications 1 à 4, caractérisé en ce que la température de l'oléum est de l'ordre de 104 à 108°C.

6. Procédé selon une quelconque des revendications 1 à 5, caractérisé en ce que l'oléum est maintenu à une concentration en acide comprise entre 100,5 et 108% environ d'acide sulfurique équivalent.

7. Procédé selon la revendication 6, caractérisé en ce que l'oléum est maintenu à une concentration en acide comprise entre environ 101 et 103% d'equivalent d'acide sulfurique.

8. Procédé selon une quelconque des revendications 1 à 7, caractérisé en ce que l'on détermine la concentration en acide de l'oléum et contrôle la quantitié de trioxyde de soufre utilisée dans la réaction pour que l'oléum soit maintenu à une concentration prédéterminée.

9. Procédé selon une quelconque des revendications 1 à 8, caractérisé en ce que le gaz, après purification, contient du trioxyde de soufre et que l'on en détermine la concentration, la quantité de trioxyde de soufre utilisé dans la réaction étant telle que sa concentration dans le gaz purifié soit au maximum de 0,5%.

10. Procédé selon une quelconque des revendications 1 à 8, caractérisé en ce que le gaz à purifier soit à une température d'environ 113—176°C.

FIG. I